# EUROPEAN PATENT APPLICATION

(11) **EP 0 637 793 A1**
(43) Date of publication of application: **08.02.1995**
(21) Application number: 94305313.2
(22) Date of filing: 19.07.1994
(51) Int. Cl.: G06F 1/16

(54) **Docking station for portable computer**

(30) Priority: 28.07.1993 US 98973
(71) Applicant: AT&T GLOBAL INFORMATION SOLUTIONS INTERNATIONAL INC., Dayton, Ohio 45479 (US)
(72) Inventor: Heredia, Rafael, Aberdeen, NJ 07747 (US)
(74) Representative: Robinson, Robert George

(57) **Abstract**

The invention concerns an automatic docking system for a portable computer which docks with a docking station. The approach of the computer to the station is detected, and docking is temporarily prevented, while automated equipment (such as a program run on the processor of the computer) protects data within the computer, and takes other necessary steps. Then, docking is allowed.

## Description

The invention concerns docking stations for portable computers. Specifically, the invention concerns apparatus which automatically suspends operation of the computer, and other components, during docking.

Portable computers, such as laptop and notebook computers, are designed to be small in size and light in weight. These computers eliminate heavy, bulky accessories, such as cathode-ray-tube monitors, large disc drives, large tape drives, and full-size keyboards.

Many of these portable computers maintain the ability to be re-connected to these accessories. However, making and breaking connections to accessories requires a significant amount of time and manipulation, particularly if the number of accessories is large. To alleviate these problems, "docking stations" have been developed.

A docking station is a stationary device which stands connected to multiple accessories. In addition, docking stations frequently include facilities for accepting expansion cards, and for connecting the expansion cards to the internal busses of the portable computer. The user connects the portable computer to the docking station, in a single, easy maneuver. When connected, the portable computer acquires the capabilities of a larger, desktop machine.

To connect a portable computer with the docking station, the user typically first terminates power to both the computer and the docking station, and then slides the computer into a chute, or along rails, until connectors on the computer make connection with corresponding connectors on the docking station.

A primary reason for terminating power is the potential hazard (to data) in making connections between powered electronic components.

One data hazard is that, if the computer is running, some of the lines on the internal bus will be in a logic HIGH state (eg, above 2.0 volts for TTL). When one of these lines connects to a mating line, in a docking station, there is no assurance that the mating line will be in the same logic state, nor, if in the same state, at the same voltage.

When connectors at different voltages make contact, intermittent electrical arcing occurs during the contacting process. (This type of arcing occurs in electrical switches, and is called contact bounce.) The arcing acts as a short circuit between the two lines. The result is that a random number of ONEs and ZEROs are applied to the line carrying the lower voltage.

This random sequence, occurring on multiple lines, can be interpreted as data, or commands, and can initiate unwanted events, such as loss of stored data.

A second hazard is that, when a powered data line makes contact with a non-powered data line, the impedance presented by the non-powered line is not known. If the impedance is low, then the non-powered line can draw a large current.

This large current can damage the driving circuit connected to the powered line. Further, the large current can cause a large voltage drop across the internal output impedance of the driving circuit. This voltage drop can cause the voltage on the output line to fall to logic ZERO. Now, the active components connected to this line (within the computer) receive ZEROs instead of ONEs. Their operation has been disrupted.

After docking, the computer is re-powered. This re-powering causes the normal initialization procedure of the operating system in the computer. However, in some circumstances, this re-initialization would be required, even if power were not terminated.

For example, if the computer contains a disc drive (either fixed or floppy), and it docks with a station which also contains a disc drive, the computer must learn of the existence of the extra disc drive, and take certain steps. Typically, these steps are included in the initialization procedure, which occurs upon power-up of the computer. During initialization, the computer searches for disc drives. When it finds disc drives attached, it takes appropriate initialization steps, such as giving names to the drives (eg, "a", "b", etc.)

As another example, there exist expansion cards which are compatible with several types of bus architectures. The card must be told by a processor, what type of architecture is present. The architecture identification occurs during the initialization routine.

Therefore, reasons exist for terminating power when a portable computer docks with a docking station. Additional reasons exist for executing an initialization routine after docking has completed.

An object of the invention is to alleviate one or more of the aforementioned problems.

According to a first aspect of the present invention there is provided a portable computer characterized in that the computer comprises control means for modifying the operation of the computer in response to a signal indicative that docking of the portable computer with a docking station is to take place.

According to a second aspect of the present invention there is provided a docking station for a portable computer, comprising one or more accessories which connect with the computer when the computer is docked in the station, characterized in that the docking station further comprises a detector for detecting the approach of the computer and producing an approach signal in response thereto, and an initialization system for applying a predetermined sequence of signals to the one or more accessories, in response to the approach signal, to modify the operation of the one or more accessories for connection to the computer prior to docking.

According to a third aspect of the present invention there is provided a method of docking a portable computer with a docking station connected to one or more accessories, characterized by actuating a detector within the computer or docking station by moving the computer with respect to the docking station, the detector thereupon producing a signal which instructs the portable computer or docking station to protect data within the computer, docking station or one or more accessories from disruption caused by docking.

Embodiments of the present invention will now be described, by way of example, with reference to the accompanying drawings, in which:
Figures 1 - 3 illustrate three embodiments of the invention;
Figure 4 illustrates the location of detectors shown in Figure 5;
Figure 5 illustrates detectors which sense docking, or withdrawal;
Figure 6 illustrates an additional pin P2, which senses seating of the connectors C;
Figure 7 illustrates mechanical switches which detect docking;
Figures 8 - 11 illustrate a sequence of events undergone by the apparatus of Figure 7;
Figure 12 shows a docking station equipped with the switches of Figure 8, in order to initiate suspension in the docking station, if needed;
Figure 13 illustrates the generation of a signal when the computer is within the suspension zone;
Figure 14 illustrates an optical method of generating a signal when the computer is within the suspension zone;
Figure 15 illustrates an intelligent docking station, with a personal computer located within the docking station; and
Figures 16 and 17 illustrate one embodiment of the invention undergoing a docking sequence.

When docking is about to occur, a detector, built into the computer, detects this fact, and triggers software in the computer into action. The software causes the computer to take the steps necessary for safe docking, such as saving data within RAM and suspending the processor.

The software then indicates to the user that the computer is ready for docking. The user docks the computer, and then issues a signal to the computer indicating that docking is complete. The computer then undergoes the normal initialization, which initializes both (a) the components in the computer and (b) components in the docking station.

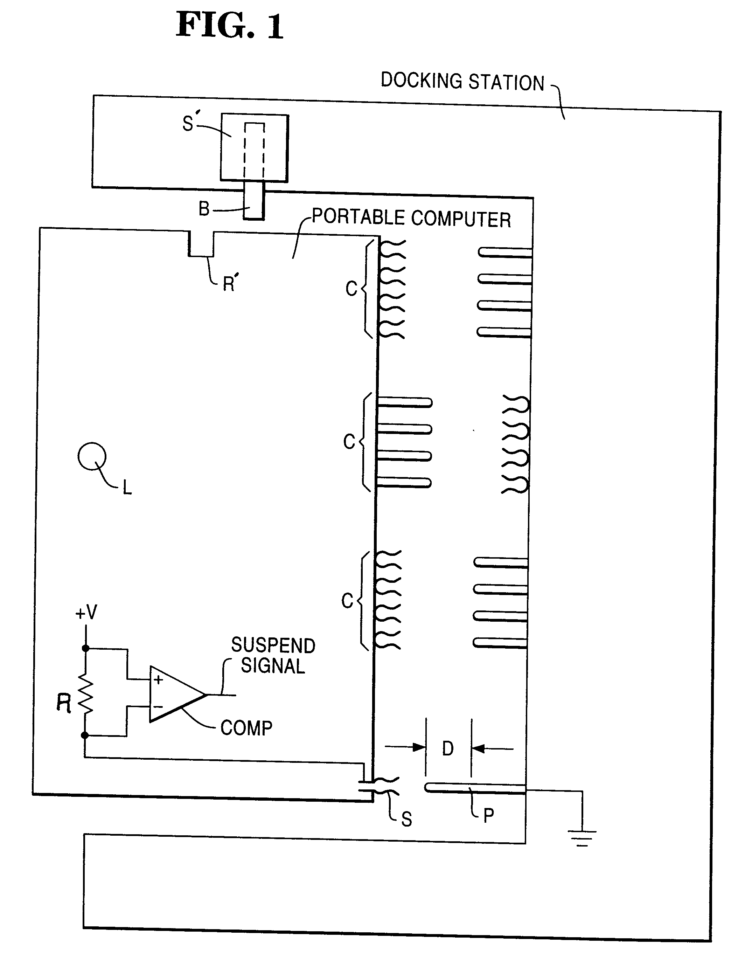

Figure 1 shows schematically a portable computer approaching a docking station. The connectors C on each make contact when docking occurs. The computer must be informed of the imminent docking, so that it can take appropriate action, such as terminating power, or otherwise suspending operation, and then re-initializing the system.

During the docking, a pin P (which is longer than the other pins, and thus makes contact before the others) makes contact with a socket S. This contact produces a SUSPEND SIGNAL. One way to sense this contact is to sense the voltage drop across a resistor R, by using a comparator COMP. The comparator COMP produces the SUSPEND SIGNAL.

The processor within the computer detects the SUSPEND SIGNAL. One detection approach is to design the SUSPEND SIGNAL to act as an interrupt, such as a System Management Interrupt (SMI). SMI's are known in the art.

In response to the SUSPEND SIGNAL, the following events occur:

STEP 1. The portable computer is temporarily blocked from completing the docking operation: the connectors C in Figure 1 are prevented from mating. This blocking can be accomplished by a solenoid S' in Figure 1, which actuates a bolt B which enters a recess R' and immobilizes the portable computer.

The actuation of the solenoid is accompanied by illumination of a warning light L, which signals the user not to attempt to force the computer into a fully docked position.

STEP 2. The processor saves the contents of random access memory (RAM) to a fixed drive. If the memory contents are not saved, they can be lost during the forthcoming suspension of the processor or during docking. That is, if the processor is suspended by terminating power, then the RAM contents will certainly be lost. If the processor is suspended by stopping the clock, then the hazards described in the Background may destroy data in RAM.

STEP 3. The processor is suspended. The suspension can be accomplished by stopping the system clock or, in some processors, applying a signal to a dedicated pin which suspends operation. Alternately, power to the computer can be terminated, to execute the suspension.

Additional steps 4 - 6 must be taken if the docking station contains components which are running.

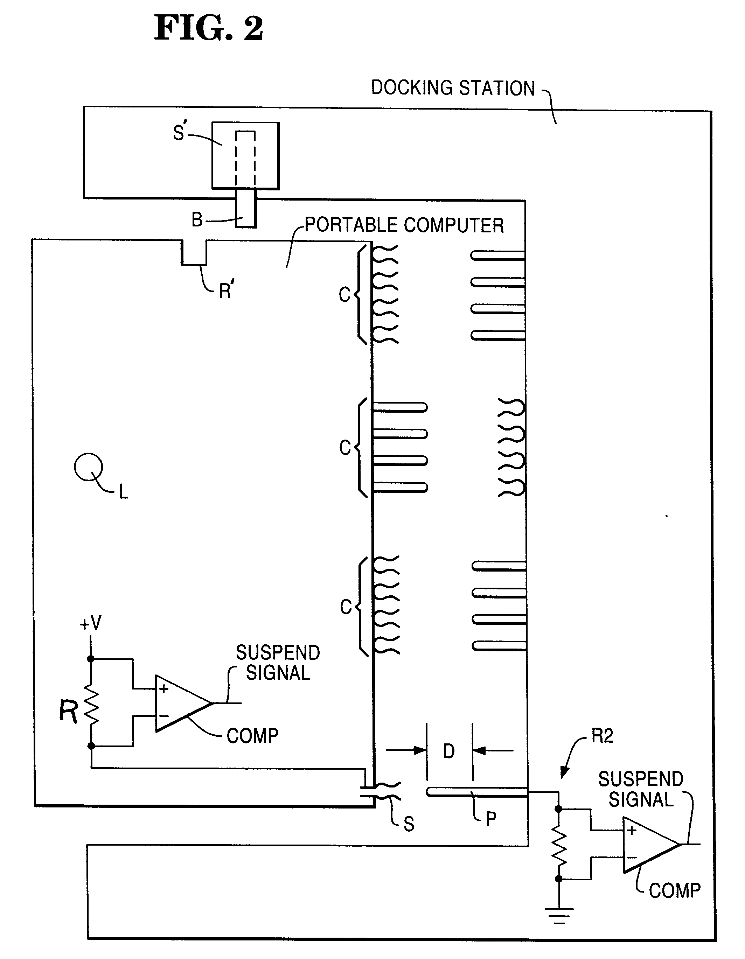

STEP 4. An additional SUSPEND SIGNAL, in Figure 2, is generated in the docking station. The SUSPEND SIGNAL can be generated in the same way as in the computer, namely, by a comparator COMP which senses the current through a resistor R2, as shown.

STEP 5. If the docking station is equipped with RAM, the contents of the RAM are saved to disc.

STEP 6. Then, power is terminated to the components in the docking station. Now docking can be completed.

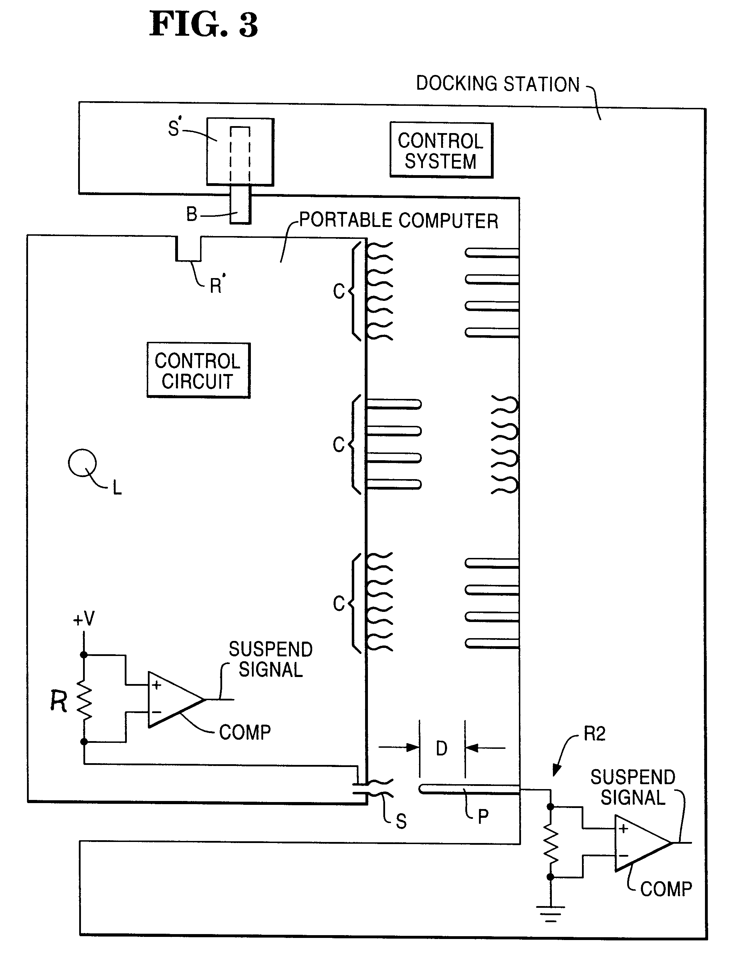

Steps 4 - 6 are executed by a CONTROL SYSTEM, shown in Figure 3, of a type known in the art. Power is supplied to the CONTROL SYSTEM at all times; it is not suspended.

Alternately, as later discussed, the docking station may contain a processor. If so, the processor controls steps 4 - 6.

STEP 7. The solenoid bolt B in Figure 2 is retracted. The indicator light L goes off. The user is now allowed to continue the docking operation.

STEP 8. After docking is complete, suspension of the processor is terminated, and the processor executes its normal initialization procedure. During this procedure, the processor will detect components within the docking station, such as expansion cards or drives, and take the proper configuration steps. The processor will also load the proper configuration data into CMOS memory, for later use. The configuration steps are known in the art.

An event must trigger step 8. This event can be a signal generated by a user-actuated switch (not shown). The user actuates the switch after the user completes the docking operation in response to the light L being extinguished. This switch restores power to the computer, and can be viewed as operating in parallel with the normal power switch of the computer.

As an example, the normal power switch and the switch in question can both control a single relay (or solid state switch) which feeds power to the computer. Either can turn power on.

The Inventor wishes to emphasize that an important aspect of the invention is that software carried by the portable computer controls the sequence of docking events. One sequence is given above. The software is triggered into operation by the SUSPEND SIGNAL (or other events, as discussed below). Of course, some or all of the software functions can be handled by firmware.

To remove the computer from the docking station, the user actuates a switch (not shown). The switch issues an EJECT signal, which causes the following events:

STEP 1A. The data in RAM in the computer is stored in a fixed drive.

STEP 2A. The processor is suspended, or power is terminated.

STEP 3A. The CONTROL SYSTEM in the docking station, if RAM is present, stores data in a fixed drive. The CONTROL SYSTEM terminates power to the appropriate components.

STEP 4A. The LED L is illuminated, indicating to the user that the computer can be disengaged from the docking station.

STEP 5A. After the user disengages the computer, the user actuates a switch on the computer, which powers up the computer, and actuates a switch on the docking station, which powers up the station. Now, both the computer and the station are running independently.

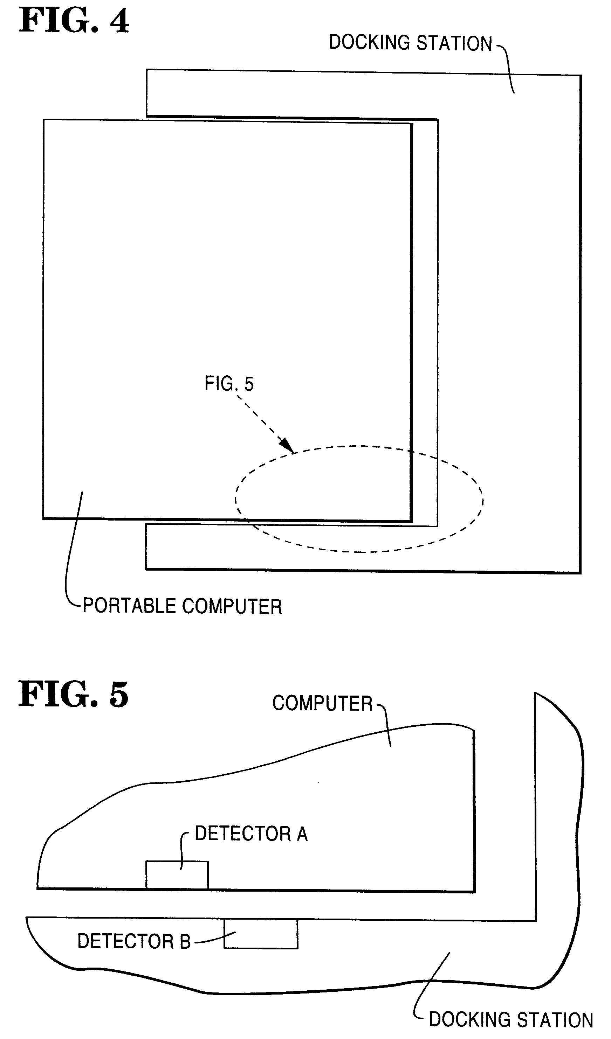

This step (5A) can be taken automatically. For example, DETECTOR A in Figure 5 on the computer can detect the disengagement, as can DETECTOR B on the docking station. Each DETECTOR issues a signal which orders its respective device to power up.

The Inventor points out that, depending on the particular embodiment of the invention, actions may be required while the processor is suspended or non-powered.

For example, during disengagement, power to the computer may be off. However, a CONTROL in Figure 3, powered by the computer's battery, would still be operative. The CONTROL detects the completion of disengagement, by appropriate sensors, and then issues a signal which causes the computer to power up. Similarly, the CONTROL SYSTEM in Figure 3, contained in the docking station, retains power, so that, for example, it can operate the solenoid S'.

Similar events may occur in the docking station, again, depending on the embodiment used.

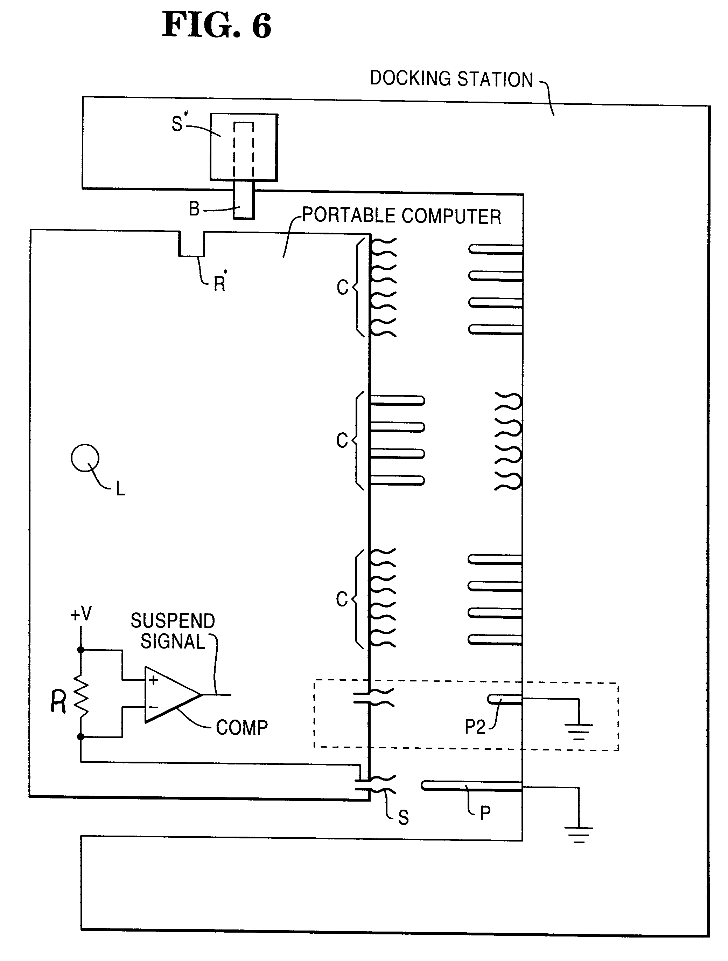

In an alternative embodiment the triggering event for STEP 8, above, can be automatic. For example, the pin P2 in Figure 6 (shown in the dashed box) can produce a READY signal, in the same manner as pin P in Figure 1. Pin P2 is shorter than the pins in the other connectors, and only makes connection with its socket after all other connectors mate.

Pin P2 produces a ready signal, in the same manner that P1 in Figure 1 produces a SUSPEND SIGNAL.

When P2 is provided the CONTROL CIRCUIT in FIgure 3 (which is not suspended, nor which does not lose power) can be provided to sense the READY signal, and restore power to the portable computer. (If power was not terminated during docking, but the processor only suspended, then the CONTROL CIRCUIT terminates the suspension, instead of restoring power.)

The pin P2 need not be used to detect the imminent docking. Instead, a switch, which is actuated by the user, can be provided. In this case, the user actuates the switch, which triggers steps 1 - 3 above. Then the user docks the computer after the light L in Figure 3 goes out. Then the user actuates the switch discussed in connection with STEP 8, which terminates suspension and triggers initialization.

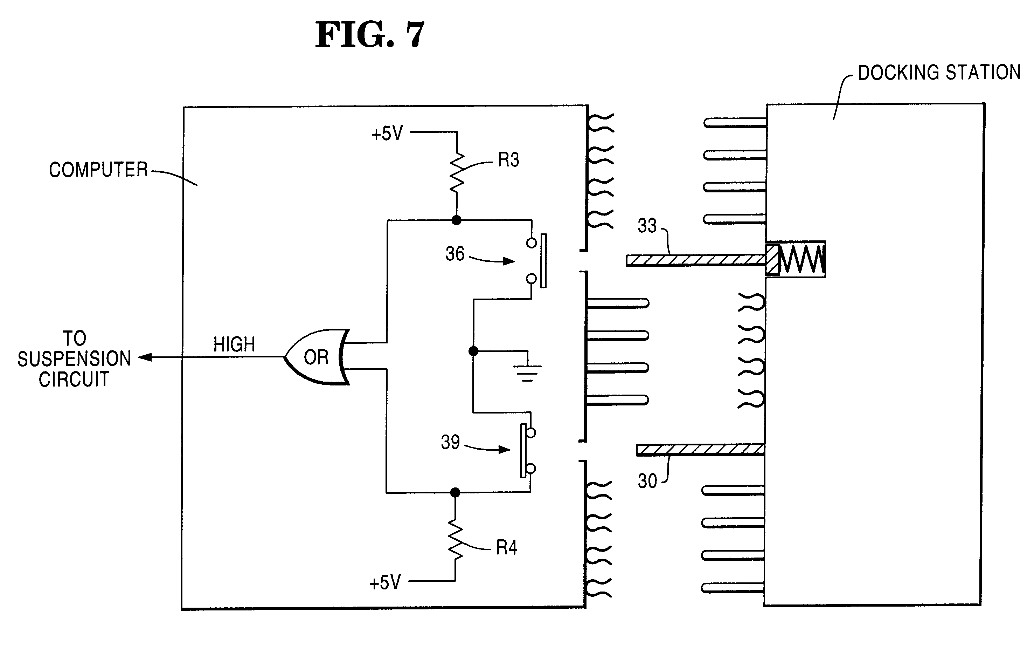

The discussion above assumed that pins P and P2 in Figure 6 detected the docking process. Other approaches are possible. Figure 7 illustrates one apparatus, which uses mechanical switches.

In Figure 7, two switches 36 and 39 are biased by springs (not shown) into the positions shown. When the COMPUTER and the DOCKING STATION are sufficiently far apart, switch 36 is open. Resistor R3 applies a HIGH signal to the OR gate, producing a HIGH output, as indicated.

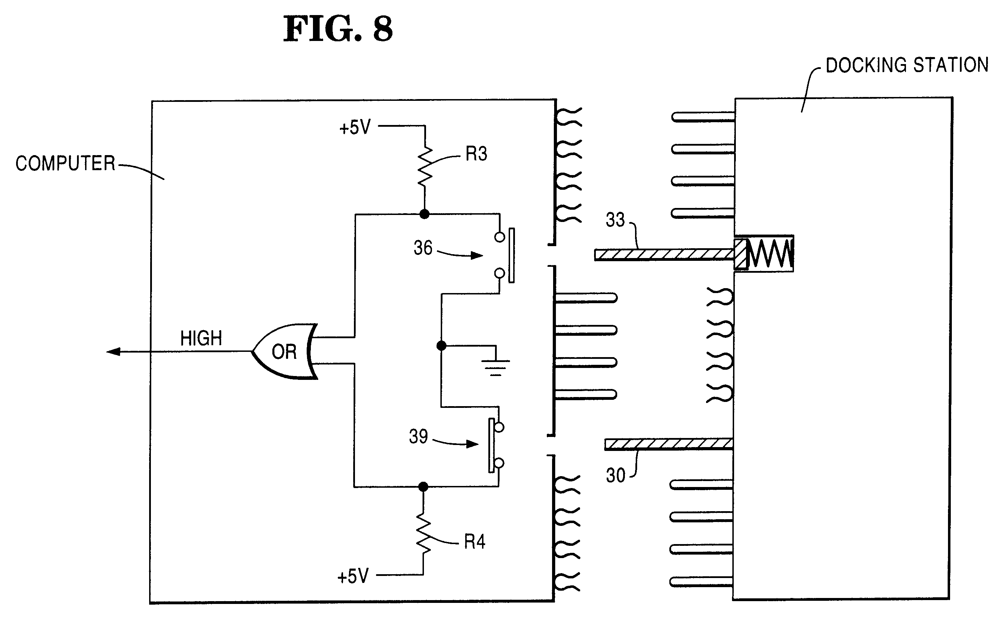

The output of the OR gate leads to the processor, or to the CONTROL CIRCUIT of Figure 3, which are both indicated by the phrase "TO SUSPENSION CIRCUIT" in Figure 7. The presently existing HIGH signal causes the suspension circuit to take no action. When the COMPUTER approaches the DOCKING STATION, the events illustrated by the sequence of Figures 8 - 11 occur.

Figure 8 is a copy of Figure 7. In Figure 8, the COMPUTER approaches the DOCKING STATION. Switch 36 is open, causing the OR gate to produce a HIGH signal, as in Figure 7.

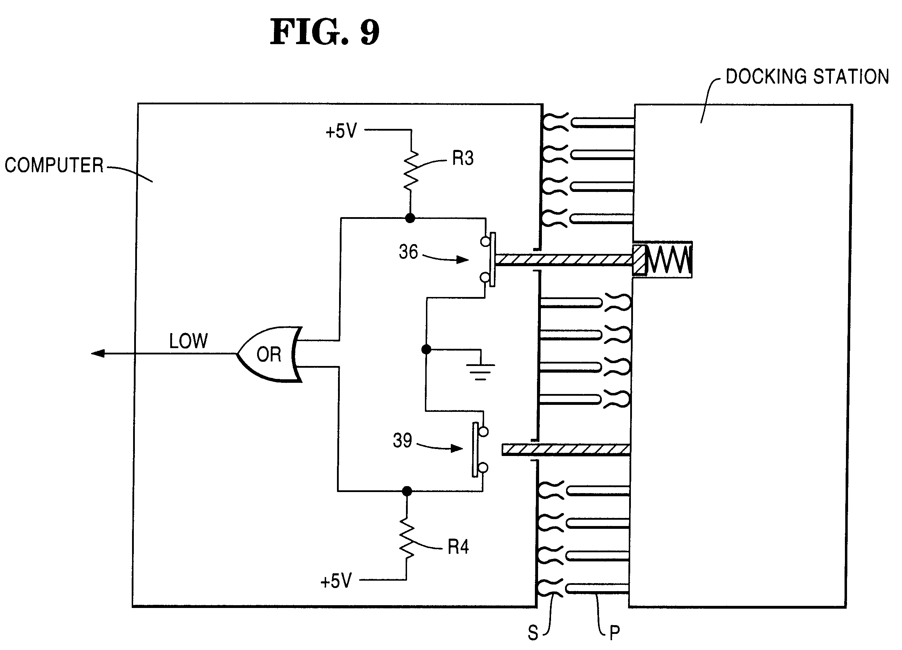

In Figure 9, when the COMPUTER draws sufficiently close to the DOCKING STATION, switch 36 is closed by probe 33, causing the OR gate to produce a LOW signal. This LOW signal is read by the computer, which imposes suspension, as described earlier.

The switches 36 and 39 are designed such that the LOW signal in Figure 9 occurs before any of the pins P and sockets S make contact.

Next, as the COMPUTER draws closer to the DOCKING STATION, some pins P and sockets S make contact. The OR gate still produces a LOW signal; the COMPUTER is still suspended.

Then, as the COMPUTER draws still closer to the DOCKING STATION, all pins P and sockets S have made contact. Then, probe 30 opens switch 39. The OR gate produces a HIGH signal, as indicated. The suspension is terminated; the computer resumes operation.

Suspension occurs, and is maintained, whenever the output of the OR gate is LOW.

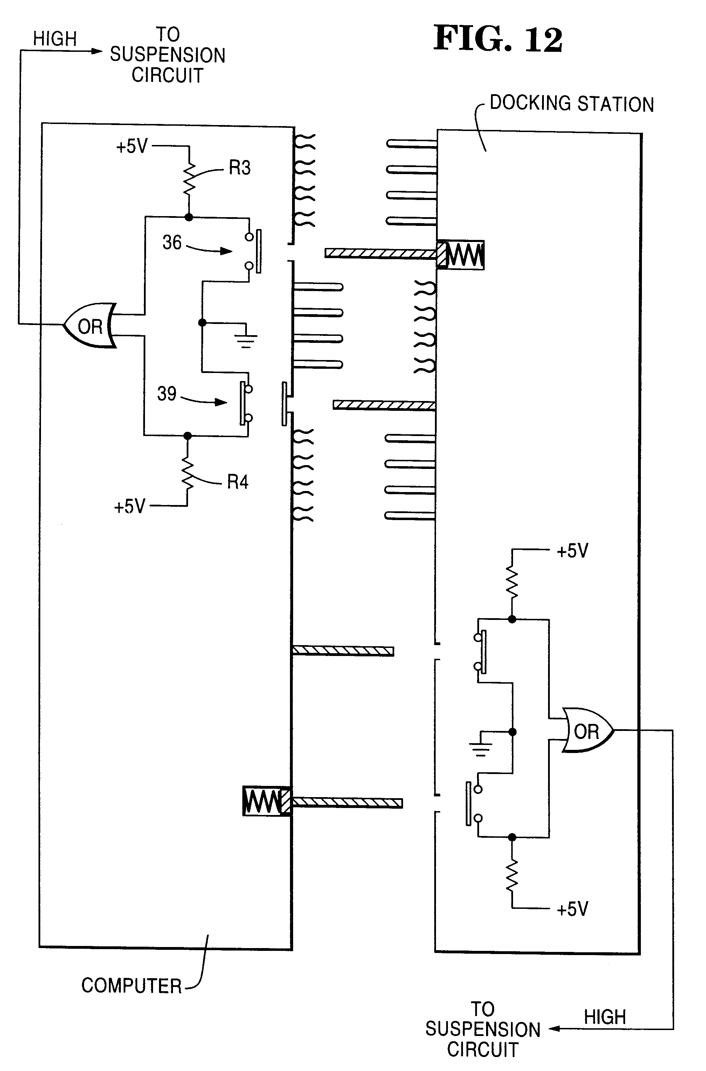

Because of the limits which exist in manufacturing tolerances, all pins P will not contact their sockets S simultaneously; some will make contact first, and others will do so later. Both switches 36 and 39 remain closed while this contact is being made. The docking station can be equipped with switches, as shown in Figure 12, which perform the same sequence described in Figures 8 - 11.

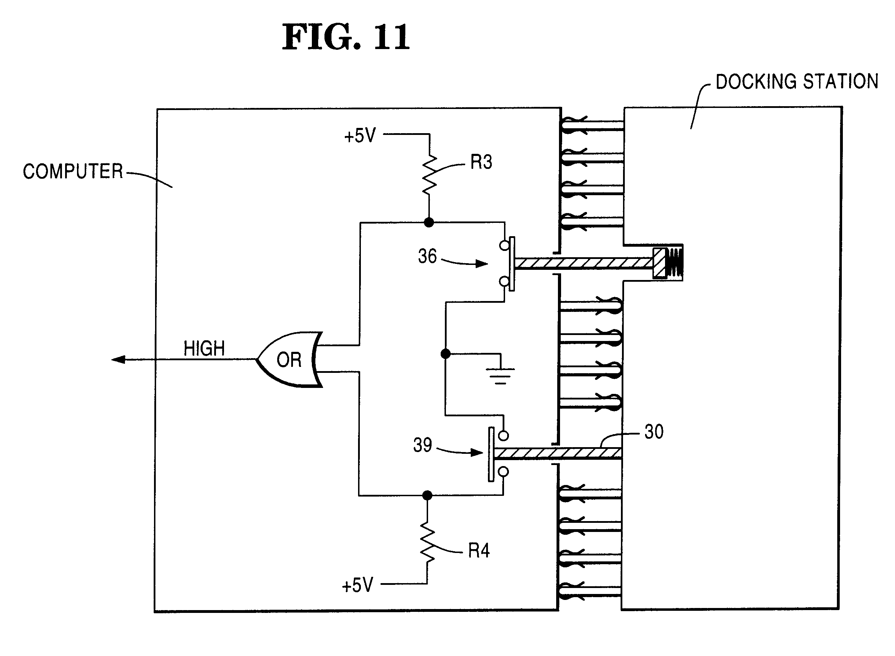

The invention provides a "suspension zone." When the COMPUTER is outside the suspension zone, the switches maintain the positions shown in Figure 8, or Figure 11. One of the switches is open, causing the OR gate to produce a HIGH signal. Suspension is not imposed.

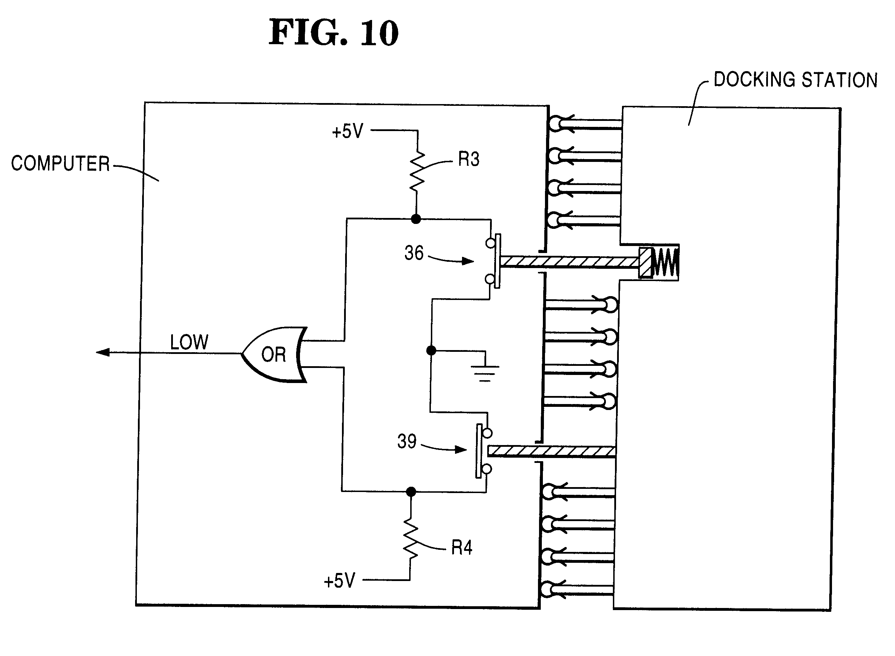

However, when the computer enters the suspension zone, as in Figure 9 or Figure 10, both switches become closed, causing the OR gate to produce a LOW signal. Suspension is imposed.

When the COMPUTER is withdrawn from the DOCKING STATION, a reversal of the sequence of events occurs. The initial situation is as shown in Figure 11. As the COMPUTER withdraws, the situation shown in Figure 10 occurs, causing suspension. Then the situation shown in Figure 9 occurs, maintaining suspension. Finally, the situation of Figure 8 occurs, terminating suspension.

Therefore, this embodiment provides an automatic apparatus for detecting entry of a portable computer into a docking station, and providing a suspension signal while connection is being made by the connectors. Similarly, upon withdrawal of the computer from the docking station, the invention provides an automatic apparatus for detecting the withdrawal, and providing a suspension signal while connection is being broken between the computer and the docking station.

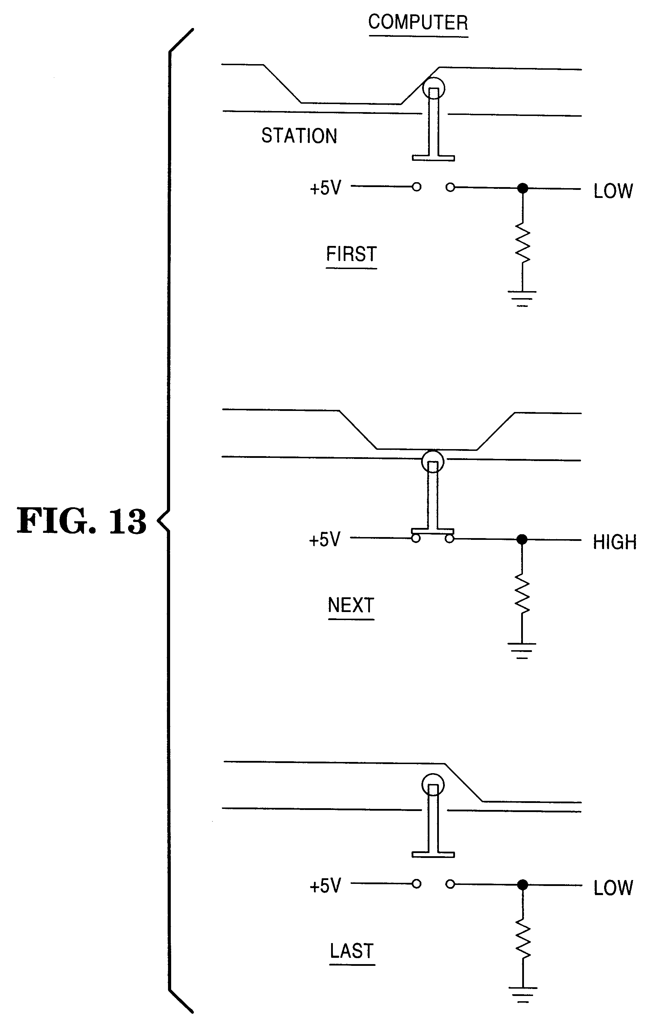

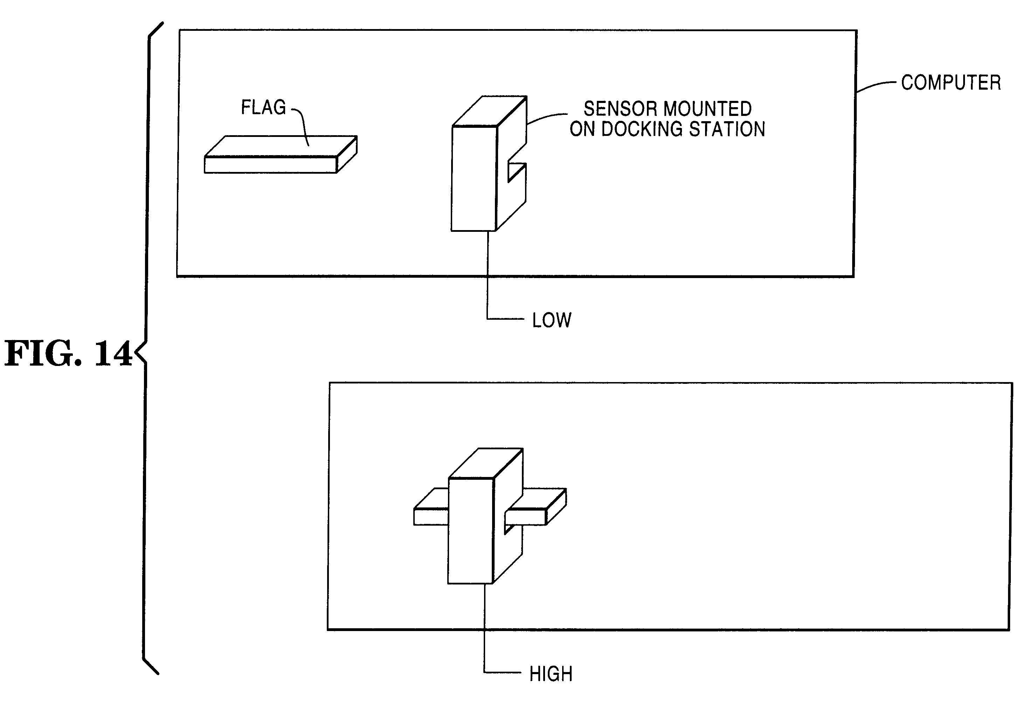

The apparatus of Figure 7 is perhaps overly complicated, but has the benefit of simplifying explanation. Figures 13 and 14 illustrate approaches to generating a signal when the computer is within the suspension zone. Figure 13 is considered self-explanatory.

Figure 14 illustrates an optical detector. A FLAG breaks a light beam (not shown). The FLAG only breaks the beam when the computer is within the suspension zone.

The docking station may have intelligence, so that, when its portable computer is withdrawn, the docking station can operate independently. For example, the docking station can send data and files over telephone lines and network channels, and receive data and files over the same media. The docking station transfers the data and files to and from its portable computer when the computer is docked.

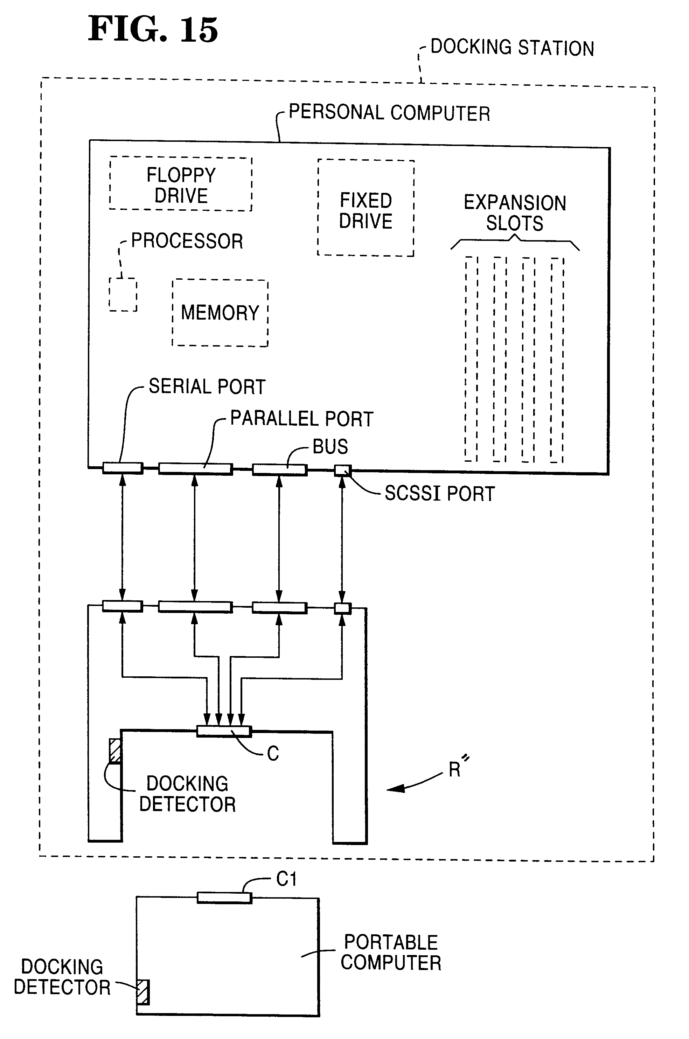

An exemplary intelligent docking station will be discussed, with reference to Figure 15. The processor in a personal computer (PC) supplies the intelligence, and the peripherals of the PC provide support functions.

One reason for utilizing a PC in the example is ease of explanation: there is widespread familiarity of the capabilities of the PC. An actual docking station may, or may not, use a full PC, as shown in Figure 15, or may delete certain items. For example, the docking station may eliminate the floppy disc drive.

Several cables, indicated by the double arrows, connect between a receiver R'', for the portable computer, and the PC. Preferable, the receiver R'' contains a single connector C, containing a large number of pins, in excess of one hundred. The connector C mates with a connector C1 on the portable computer. Both the docking station and the PC contain a DOCKING DETECTOR, which suspends operation, as described earlier.

When a docking operation occurs, both the portable computer and the docking station must be informed of the imminent docking. Several ways to do this are the following:

The imminence of docking must be detected, so that the portable computer and the docking station can suspend operation, or terminate power to live connectors, as appropriate. The imminence of docking can be detected as in Figure 1 or the sequence of Figures 9 - 11.

The completion of docking must be detected, so that the processors in both the docking station and the portable computer can re-initialize. Completion can be detected as described earlier.

Imminence of withdrawal can be detected, for example, as described above in connection with the (reverse) sequence of Figures 11 through 8. Suspension, and then re-initialization, is triggered accordingly.

The docking station is equipped with software, which it stores in a fixed drive or in memory accessible to the processor, or in another location. This software has the capability to perform the following actions:
-- Accept and store incoming data and files on communication channels, such as network links and telephone lines.
-- Accept and store incoming data and files on channels connected to the portable PC, via the docking station.
-- Transmit stored data and files to the portable PC upon request.

It is known in the art how to write code which will execute these functions.

It is recognized that the particular sequence of operations required for a given system will depend upon the equipment contained within the docking station and the portable computer. The program which the processor runs to prepare this equipment for docking will be written accordingly.

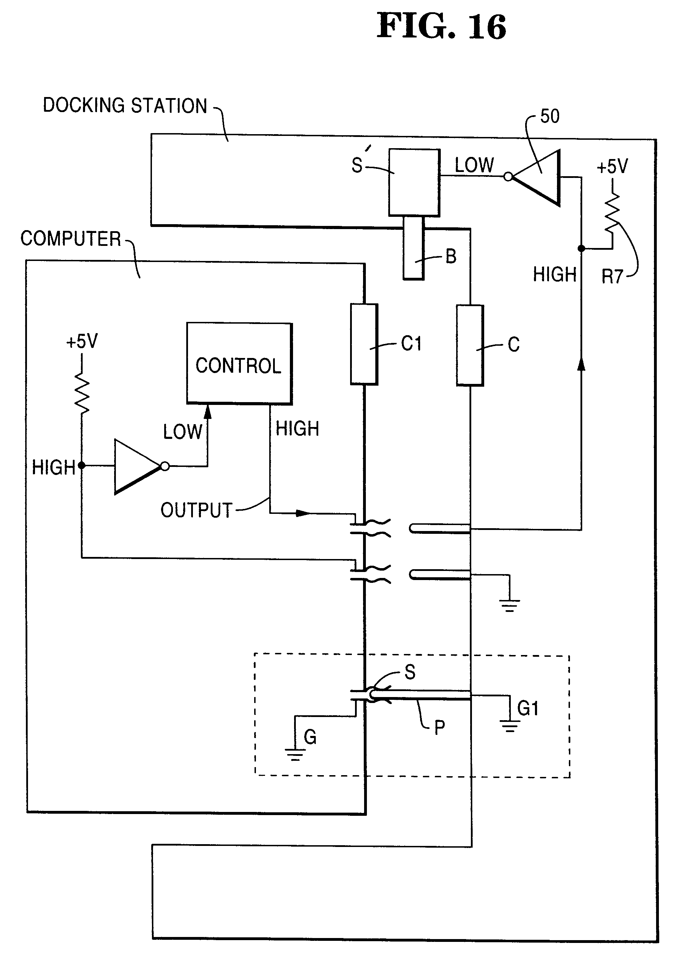

In the embodiment shown in Figure 16, when the portable computer is about to dock a long pin P makes contact with a socket S, establishing a common ground reference. At this time, a resistor R7 causes a LOW signal to be applied to the solenoid S'. (A driver may be interposed between the inverter 50 and the solenoid S'.) This LOW signal causes the bolt B of the solenoid S' to be extended, blocking the route of connector C1 to its mate, connector C.

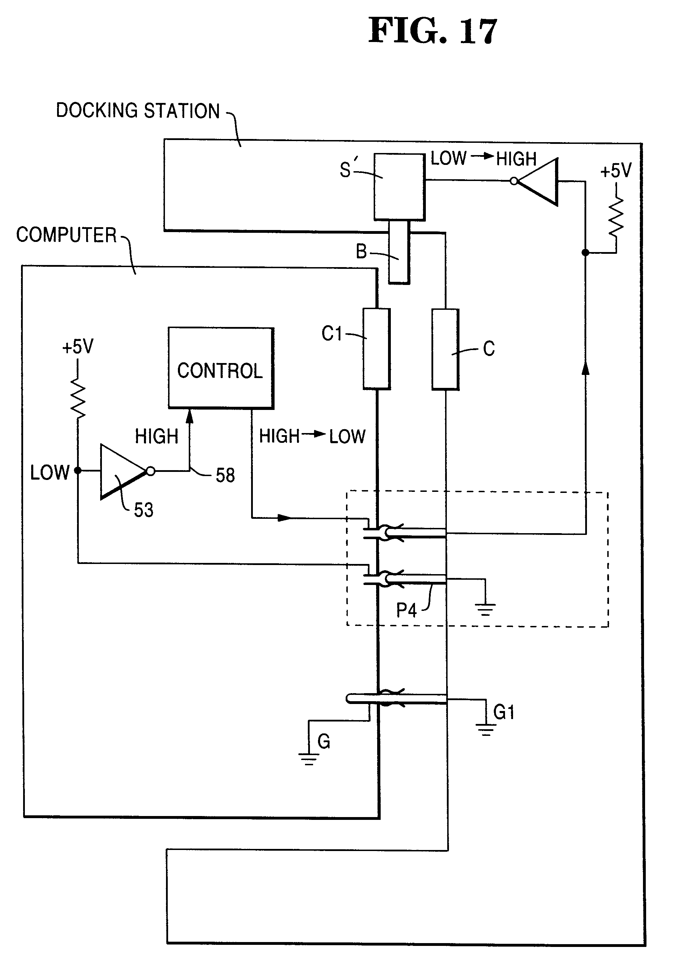

As the computer continues the docking operation, two other pins, indicated in the dashed box in Figure 17, make contact simultaneously. Pin P4 applies a LOW signal to inverter 53, thus applying a HIGH signal to the CONTROL. That is, the input 58 to the CONTROL now sees a LOW-to-HIGH transition, as pin P4 makes contact.

At the instant of this LOW-to-HIGH transition at input 58, the bolt B is still extended. Connector C1 cannot mate with connector C at this time. The CONTROL, in response to this LOW-to-HIGH transition, causes suspension of the computer, as described earlier. Then, when suspension is complete, the CONTROL issues a HIGH-to-LOW signal, as indicated, which applies a LOW-to-HIGH signal to the solenoid S'. The bolt B now retracts (retraction is not shown), allowing connectors C and C1 to mate.

The SUSPEND signal, discussed in connection with Figures 8 - 11, is produced both upon withdrawal and approach of the computer. On approach, the SUSPEND signal causes the storage of data, suspension of the processor, and the release of the bolt B. Figure 17 shows the bolt B.

On withdrawal, the SUSPEND signal causes the same sequence. However, on withdrawal, the bolt B is presently locking the computer into the docking station, as by engagement with the recess R' in Figure 1. Releasing the bolt releases the computer.

## Claims

1. A portable computer characterized in that the computer comprises control means for modifying the operation of the computer in response to a signal indicative that docking of the portable computer with a docking station is to take place.

2. A portable computer according to claim 1, characterized by a detector (A,B,P1,P2,36,39) which detects the presence of a docking station, and issues a signal in response thereto which activates the control means.

3. A portable computer according to claim 1 or claim 2, characterized in that the control means causes a processor within the computer to become idle during docking.

4. A portable computer according to claim 1 or claim 2, characterized by means for suspending a clock in the computer in response to the signal produced by the detector.

5. A portable computer according to any one of the preceding claims, characterized by means (S',B,R') which prevent the connection of the computer to the docking station before the control means has modified the operation of the computer for docking.

6. A docking station for a portable computer, comprising one or more accessories which connect with the computer when the computer is docked in the station, characterized in that the docking station further comprises a detector (A,B,P1,P2,36,39) for detecting the approach of the computer and producing an approach signal in response thereto, and an initialization system for applying a predetermined sequence of signals to the one or more accessories, in response to the approach signal, to modify the operation of the one or more accessories for connection to the computer prior to docking.

7. A docking station according to claim 6, characterized by a processor which can communicate with the one or more accessories connected thereto, and a memory means accessible by the processor.

8. A docking station according to claim 6 or claim 7, characterized by means which prevent the connection of a portable computer to the docking station before the operation of the one or more accessories has been modified.

9. A method of docking a portable computer with a docking station connected to one or more accessories, characterized by actuating a detector (A,B,P1,P2,36,39) within the computer or docking station by moving the computer with respect to the docking station, the detector thereupon producing a signal which instructs the portable computer or docking station to protect data within the computer, docking station or one or more accessories from disruption caused by docking.

10. A method according to claim 10, characterized by further including temporarily preventing docking until data within the computer, the docking station or the one or more accessories has been protected.
